# EUROPÄISCHE PATENTSCHRIFT

(11) **EP 0 719 515 B1**
(45) Veröffentlichungstag und Bekanntmachung des Hinweises auf die Patenterteilung: **15.07.1998**
(21) Anmeldenummer: 95117616.3
(22) Anmeldetag: 08.11.1995
(51) Int. Cl.: A47J 41/02, A47J 36/14

(54) **Thermokanne**
Thermally insulating jug
Carafe isolante

(30) Priorität: 28.12.1994 DE 9420827 U
(43) Veröffentlichungstag der Anmeldung: 03.07.1996
(73) Patentinhaber: EMSA-Werke Wulf GmbH & Co., 48282 Emsdetten (DE)
(72) Erfinder: Wulf, Christian, D-48282 Emsdetten (DE)
(74) Vertreter: Grünecker, Kinkeldey, Stockmair & Schwanhäusser Anwaltssozietät

(56) Entgegenhaltungen:
- EP-A- 0 023 705
- EP-A- 0 052 726
- EP-A- 0 474 980
- DE-A- 2 021 255
- FR-A- 952 781

## Beschreibung

Die Erfindung betrifft eine Thermokanne mit den Merkmalen des Oberbegriffs des Anspruchs 1.

Eine solche Thermokanne ist aus der EP 0 023 705 A1 bekannt. Bei der vorbekannten Thermokanne ist ein Flaschenkolben in einem Kannenkörper enthalten, welcher zumindest ein Kannengehäuse und einen mit diesem lösbar verbundenen Kanneneinlauf aufweist. Im Kanneneinlauf ist eine mit dem Inneren des Flaschenkolbens in Verbindung stehende und durch einen Deckel verschließbare Einfüllöffnung ausgebildet.

Der Flaschenkolben ist in der Regel doppelwandig und evakuiert, um eine eingefüllte Flüssigkeit möglichst lange thermisch isoliert aufbewahren zu können. Zusätzlich zur Doppelwandigkeit kann der Flaschenkolben verspiegelt sein. Durch Öffnen des Deckels ist die im Flaschenkolben enthaltene Flüssigkeit mittels eines hohlkehlenförmigen Ausgießers beispielsweise in ein Trinkgefäß abfüllbar. Entsprechend kann der Flaschenkolben durch die Einfüllöffnung mit einer Flüssigkeit gefüllt werden und daraufhin durch den Deckel verschlossen werden.

Bei der vorbekannten Thermokanne sind Kanneneinlauf und Kannengehäuse durch eine lösbare Schnappverbindung miteinander verbunden. Diese ist durch einen am oberen Ende des Kannengehäuses abstehenden Rastvorsprung und einen von einer Unterseite des Kanneneinlaufs abstehenden Gegenrastflansch gebildet. Der Rastvorsprung ist durch eine Abkantung am oberen Rand eines Mantelteils des Kannengehäuses und der Gegenrastflansch durch mehrere über den Umfang des Kanneneilaufs verteilte Rastzungen gebildet.

Nachteilig bei der vorbekannten Thermokanne ist, daß die Schnappverbindung im wesentlichen direkt als Nahtstelle zwischen Kanneneinlauf und Kannengehäuse sichtbar ist und sich dort vom Ausgießer des Kanneneinlaufs ablaufende Flüssigkeit ansammeln kann. Diese ist nur schwierig zu entfernen. Außerdem kann die im Bereich der Nahtstelle angesammelte Flüssigkeit durch Kapillarwirkung möglicherweise ins Innere des Kannenkörpers gelangen.

Der Erfindung liegt daher die Aufgabe zugrunde, die eingangs genannte Thermokanne dahingehend zu verbessern, daß die Nahtstelle zwischen Kannengehäuse und Kanneneinlauf weniger verschmutzt und gleichzeitig leichter zu reinigen ist, wobei ein Eindringen von Flüssigkeit in das Kannengehäuse weitestgehend verhindert ist.

Diese Aufgabe wird bei einer Thermokanne mit den Merkmalen des Oberbegriffs des Anspruchs 1 dadurch gelöst, daß der Rastvorsprung an einem in Richtung Kanneneinlauf vom oberen Ende des Kannengehäuses abstehenden Rastflansch ausgebildet ist, welcher sich ringförmig um eine der Einfüllöffnung zugeordnete Gehäuseöffnung des Kannengehäuses erstreckt, und der in Richtung Rastflansch abstehende Gegenrastflansch ringförmig ist und in Verbindungsstellung von außen am Rastflansch anliegt.

Dadurch, daß der Gegenrastflansch von außen am Rastflansch anliegt, ergibt sich nur eine relativ schwach sichtbare Nahtstelle zwischen Kannengehäuse und Kanneneinlauf die am unteren Ende des Gegenrastflansches gebildet ist. Herunterlaufende Flüssigkeit sammelt sich daher in der Regel nicht an dieser Nahtstelle an, sondern fließt weiter entlang des Mantels des Kannengehäuses. Dadurch verschmutzt die Nahtstelle weniger und ist gleichzeitig durch bessere Sichtbarkeit und einfache Zugänglichkeit leichter zu reinigen. Ebenso ergibt sich durch die Anordnung des Gegenrastflansches keine Kapillarwirkung an der Nahtstelle, so daß Flüssigkeit nicht ins Kanneninnere eindringt.

Rastflansch und Gegenrastflansch können mit nahezu beliebiger Geometrie - oval, rund, eckig oder dergleichen - entsprechend zur Form des Flaschenkörpers ausgebildet sein, wobei sich der Rastflansch ringförmig um eine der Einfüllöffnung zugeordnete Gehäuseöffnung des Kannengehäuses erstreckt und der Gegenrastflansch passend ringförmig zum Rastflansch ausgebildet ist. Dabei kann der Rastflansch direkt einen Rand der Gehäuseöffnung bilden oder gegenüber dem eigentlichen Rand radial nach außen versetzt angeordnet sein.

Bei einer eckigen oder ovalen Ausbildung von Gegenrastflansch und Rastflansch sind nur bestimmte relative Positionen von Kanneneinlauf und Kannengehäuse zur Herstellung der Schnappverbindung möglich. Kreisringförmige Flansche zeichnen sich dadurch aus, daß im Prinzip jede beliebige relative Positionierung von Kanneneinlauf und Kannengehäuse zu deren gegenseitiger Verbindung möglich ist.

Eine einfache Schnappverbindung ist beispielsweise dadurch herstellbar, daß am Rast- beziehungsweise Gegenrastflansch ein Rastvorsprung und am jeweils anderen Flansch eine entsprechende Rastnut ausgebildet ist. Um eine Art Labyrinthdichtung zwischen Rast- und Gegenrastflansch zu bilden, ist es insbesondere vorteilhaft, wenn ein entgegengesetzt zum Rastvorsprung am Rastflansch gerichteter Rastvorsprung am Gegenrastflansch ausgebildet ist. Diese Rastvorsprünge können beispielsweise in komplementär ausgebildeter Rastnuten am jeweils anderen Flansch eingreifen.

Ein einfaches Ausführungsbeispiel der Erfindung zeichnet sich dadurch aus, daß der Rastvorsprung am Rastflansch den Rastvorsprung des Gegenrastflansches in Verbindungsstellung untergreift. In diesem Fall kann auf separat ausgebildete Rastnuten verzichtet werden.

Um Kanneneinlauf und Kannengehäuse einfach miteinander zu montieren, ist es insbesondere günstig, wenn Rastflansch und Gegenrastflansch im wesentlichen vertikal verlaufen. Auf diese Weise wird der Kanneneinlauf senkrecht von oben auf das Kannengehäuse aufgerastet.

Um in einfacher Weise den Flaschenkolben bezüglich Einfüllöffnung und Gehäuseöffnung dicht am Kannenkörper anzuordnen, umgibt ein im wesentlichen horizontaler Öffnungsrand die Einfüllöffnung und ist zwischen diesem, dem Rastflansch und einem oberen Rand des Flaschenkolbens ein Dichtungsring angeordnet.

Um den Dichtungsring sicher zu positionieren, ist es insbesondere von Vorteil, wenn eine radial zum Rastflansch nach innen versetzte Ringschulter vom Kannengehäuse absteht und am Dichtungsring zumindest seitlich anliegt. Auf diese Weise wird der Dichtungsring beispielsweise nach Aufrasten des Kanneneinlaufs sicher zwischen oberem Rand des Flaschenkolbens und der Ringschulter des Kannengehäuses gehalten. Es sind keine zusätzlichen Maßnahmen zum Fixieren des Dichtungsringes erforderlich. Der Dichtungsring kann auch erst nach Aufrasten des Kanneneinlaufs eingesetzt werden.

Dabei erweist es sich insbesondere als vorteilhaft, wenn Ringschulter und Rastflansch als U-Schenkel eines U-Profils am oberen Ende des Kannengehäuses ausgebildet sind. Durch dieses U-Profil wird die Abdichtung zwischen Kanneneinlauf und Kannengehäuse weiter verbessert.

Der Dichtungsring weist in der Regel einen umgekehrten L-förmigen Querschnitt auf. Ein kürzerer L-Schenkel liegt auf dem oberen Rand des Flaschenkolbens auf, während der längere U-Schenkel von außen am Flaschenkolben benachbart zur entsprechenden Öffnung anliegt. Um den Dichtungsring entlang seines längeren L-Schenkels sicher zu halten und abzustützen, ist es insbesondere günstig, wenn die Ringschulter mit ihrem unteren Ende über einen U-Steg des U-Profils nach unten in Richtung Flaschenkolben übersteht. Die Länge der Ringschulter kann dabei der Länge des längeren L-Schenkels entsprechen.

Analog zum Rastflansch kann die Ringschulter beabstandet zur Unterseite des Kanneneinlaufs enden. Zur zusätzlichen Abdichtung kann ebenso vorgesehen werden, daß die Ringschulter in Verbindungsstellung mit ihrem oberen Ende von unten am Öffnungsrand des Kanneneinlaufs anliegt. Eine Art von Führung für den Flaschenkolben mit aufgesetztem Dichtring und ein Anpressen des Dichtungsrings an einen oberen Rand des Flaschenkolbens ergibt sich bereits dadurch, daß die Ringschulter gegenüber dem Rastflansch unter einem spitzen Winkel nach außen geneigt ist. So wird die Gehäuseöffnung von einem zum Kanneneinlauf schmaler werdenden Öffnungsrand umgeben.

Bei der vorbekannten Thermokanne kann das Kannengehäuse mehrteilig ausgebildet sein. Beispielsweise kann es aus einem oberen Gehäuseteil, einem unteren Gehäuseteil und einem Bodendekkel gebildet sein. Alle Teile des Kannengehäuses sind lösbar miteinander verbunden, wobei die Verbindung in der Regel eine Schraubverbindung ist. Beispielsweise kann das obere Gehäuseteil an seinem unteren Ende ein Innengewinde und das untere Gehäsueteil an seinem oberen Ende ein Außengewinde aufweisen. Im unteren Gehäuseteil ist in dessen Boden ein entsprechendes Innengewinde ausgebildet, mit dem der Bodendeckel mit entsprechendem Außengewinde verschraubbar ist. Ebenso können oberes und unteres Gehäuseteil über eine Schnappverbindung miteinander lösbar verbunden werden.

Weiterhin ist zur leichteren Handhabung der Thermokanne ein Handgriff vorgesehen, der in der Regel als Teil des Kanneneinlaufs von diesem in Richtung Kannengehäuse nach unten absteht. Der Deckel wird vorzugsweise am Kanneneinlauf verschwenkbar gelagert.

Um bei Montage von Kanneneinlauf und Kannengehäuse den Handgriff in einfacher Weise an seinem unteren Ende am Kannenkörper zu befestigen, weist der Handgriff an seinem unteren Ende ein Rastelement zum Einrasten in eine im oberen oder unteren Gehäuseteil angeordnete Rastöffnung auf.

Bei einem solchen einteilig mit einem Handgriff ausgebildeten Einlauf erweist sich die erfindungsgemäße Schnappverbindung als besonders vorteilhaft. Bei der bekannten Thermokanne muß der Handgriff während der Rotationsbewegung zum Aufschrauben des Kanneneinlaufs nach außen gebogen werden. Dies ist notwendig, da sonst der Handgriff mit seinem unteren Ende die Außenseite des Kannengehäuses beschädigen könnte.

Das Rastelement am Handgriff kann beispielsweise als ein Rasthaken ausgebildet sein, der einen oberen Öffnungsrand der Rastöffnung hintergreift. Um ein Lösen dieser Rastverbindung möglichst zu vermeiden, ist es vorteilhaft, wenn das Rastelement wenigstens zwei seitliche Öffnungsränder der Rastöffnung hitnergreifende Rasthaken aufweist. Auf diese Weise ist die Rastverbindung zwischen Handgriff und Rastöffnung verbessert.

In diesem Zusammenhang ist es weiterhin von Vorteil, wenn die Rasthaken an freien Enden von am unteren Ende des Handgriffs in Richtung Rastöffnung abstehenden Einsteckflanschen angeordnet sind. Bei entsprechend in Richtung Flaschenkolben nach innen umgebogenen seitlichen Öffnungsrändern der Rastöffnung kann auf diese Weise das Einrasten der Rasthaken weiter ins Innere der Thermokanne verlegt werden. Gleichzeitig kann durch die gegenseitige Anlage der Einsteckflansche und der umgebogenen Öffnungsränder eine festere Verbindung ermöglicht werden.

Bei einem einfachen Ausführungsbeispiel sind die Einsteckflansche im wesentlichen parallel zueinander und sind in einem zum Vergleich zur Breite des Handgriffs im Bereich der Rastöffnung geringerem Abstand angeordnet. Dadurch stehen die Einsteckflansche nach innen versetzt vom Handgriff ab, so daß die seitlich überstehenden Abschnitte des Handgriffs als zusätzliche Anlageflächen von außen am Kannengehäuse seitlich an der Rastöffnung anliegen.

Um die Rastverbindung des Handgriffs weiterhin zu verbessern, ist dessen unteres Ende als am Kannengehäuse von außen formschlüssig anliegender Anlageabschnitt ausgebildet.

Im folgenden wird ein vorteilhaftes Ausführungsbeispiel der Erfindung anhand der in der Zeichnung beigefügten Figuren näher erläutert und beschrieben.

Es zeigen:
- Figur 1: einen Längsschnitt durch eine erfindungsgemäße Thermokanne, und
- Figur 2: einen Schnitt entlang der Linie II-II aus Figur 1.

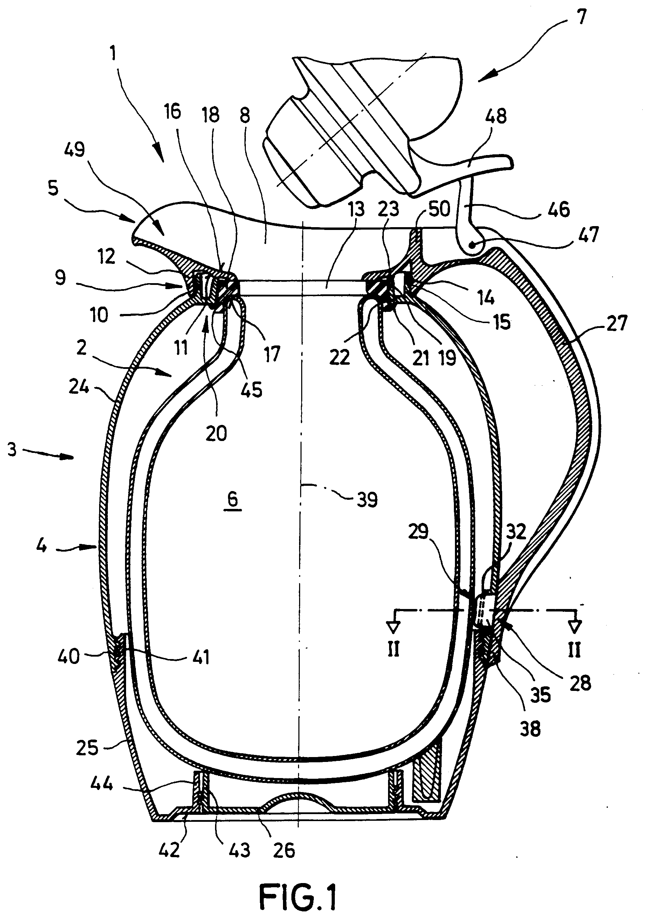

Figur 1 zeigt eine erfindungsgemäße Thermokanne 1 in einem Längsquerschnitt. Die Thermokanne 1 ist aus einem Kannenkörper 3 gebildet, in dem ein doppelwandiger Flaschenkolben 2 angeordnet ist. Der Kannenkörper 3 setzt sich aus einem Kannengehäuse 4 und einem auf dessem oberen Ende 9 aufgerasteten Kanneneinlauf 5 zusammen. Das Kannengehäuse 4 weist ein oberes Gehäuseteil 24, ein unteres Gehäuseteil 25 und einen Bodendeckel 26 auf.

Das obere Gehäuseteil 24 ist an seinem unteren Ende 14 mittels eines Innengewindes auf einem entsprechenden Außengewinde am oberen Ende 41 des unteren Gehäuseteils 25 aufgeschraubt. In seiem Boden 42 weist das untere Gehäuseteil 25 eine Öffnung auf, in die der Bodendeckel 26 eingeschraubt ist. Dazu weist ein vertikal verlaufender Öffnungsrand 44 des unteren Gehäuseteils 25 ein im wesentlichen symmetrisch zu einer Kannenlängsachse 39 ausgebildetes Gewinde auf, mit dem ein entsprechendes Außengewinde an einem im wesentlichen vertikalen Rand 43 des Bodendeckels 26 verschraubt ist.

Der Kanneneinlauf 5 weist einen hohkehlenförmigen Ausgießer 49 auf. Über diesen ist beispielsweise Flüssigkeit aus dem Inneren 6 des Flaschenkolbens 2 durch eine im Kanneneinlauf ausgebildete Einfüllöffnung 8 ausgießbar. Die Einfüllöffnung 8 ist von einem im wesentlichen horizontalen Öffnungsrand 16 umrandet. Anschließend an den Ausgießer 49 erstreckt sich um die Einfüllöffnung 8 eine nach oben abstehende Wand 50 des Kanneneinlaufs 5. Gegenüberliegend zum Ausgießer 49 weist der Kanneneinlauf 5 einen einteiligen Handgriff 27 auf, der sich von der Wand 50 bogenförmig nach unten in Richtung Kannengehäuse 4 erstreckt. An seinem unteren Ende 28 ist der Handgriff 27 im oberen Gehäuseteil 24 des Kannengehäuses 4 durch eine Rastverbindung lösbar befestigt.

Der Handgriff 27 ist im wesentlichen U-förmig, wobei die U-Öffnung von der Thermokanne 1 wegweist. In einem Anschlußbereich des Handgriffes 27 an Wand 50 ist zwischen den U-Schenkeln ein Lagerarm 46 um ein Schwenklager 47 verschwenkbar gelagert. In der dargestellten Öffnungsposition erstreckt sich der Lagerarm 46 im wesentlichen vertikal nach oben, wobei er mittels eines Kipparms 48 mit einem teilweise dargestellten Deckel 7 der Thermokanne verbunden ist. Der Kipparm 48 steht vom Deckel 7 schräg nach oben ab.

Zur einfachen lösbaren Verbindung von Kanneneinlauf 5 und Kannengehäuse 4 ist eine Schnappverbindung ausgebildet, die durch einen von der Unterseite 11 des Kanneneinlaufs 5 abstehenden Gegensrastflansch 12 und einen vom oberen Ende 9 des Kannengehäuses 4 beziehungsweise des oberen Gehäuseteils 24 abstehenden Rastflansch 10 gebildet ist. Rastflansch 10 und Gegenrastflansch 12 verlaufen im wesentlichen vertikal. Beide Flansche sind kreisringförmig ausgebildet, wobei der Gegenrastflansch radial von außen am Rastflansch 10 anliegt. Bei dem dargestellten Ausführungsbeispiel ist der Gegenrastflansch 12 mit seinem freien Ende mit einem radial auswärts des Rastflansches 10 am oberen Ende 9 des oberen Gehäuseteils 24 gebildeten Absatz in Anlage. Die Breite des Absatzes entspricht dabei im wesentlichen der Breite des freien Endes des Gegenrastflansches 12.

Der Rastflansch 10 endet mit seinem freien Ende in geringem Abstand von der Unterseite 11 des Kanneinlaufs 5.

Beabstandet und im wesentlichen parallel zum Rastflansch 10 ist eine Ringschulter 19 am oberen Ende 9 des oberen Gehäuseteils 24 ausgebildet. Diese umrandet eine entsprechende Gehäuseöffnung 13 des Kannengehäuses 4. Rastflansch 10 und Ringschulter 9 sind als U-Schenkel eines im wesentlichen U-förmigen Profils 20 ausgebildet. Die Ringschulter 19 steht mit ihrem unteren Ende 21 über einen U-Steg 22 in Richtung Flaschenkolben 2 nach unten vor.

Bei dem dargestellten Ausführungsbeispiel ist in Verbindungsstellung, das heißt bei aufgerastetem Kanneneinlauf 5, ein oberes Ende 23 der Ringschulter 19 mit der Unterseite 11 des Kanneneinlaufs 5 in Anlage. Zwischen oberem Ende 23 und unterem Ende 21 liegt die Ringschulter 19 an einem Dichtungsring 18 von außen an. Dieser Dichtungsring ist im wesentlichen im Querschnitt umgekehrt L-förmig. Der kürzere L-Schenkel liegt auf einem oberen Rand 17 des Flaschenkolbens 2 auf und begrenzt den Durchgang von Innerem 6 des Flaschenkolbens 2 zur Einfüllöffnung 8. Der längere L-Schenkel erstreckt sich im wesentlichen vertikal, wobei eine an seinem freien unteren Ende radial nach außen abstehende Dichtungslippe 45 das untere Ende 21 der Ringschulter 19 untergreift. Diese kann in Richtung Kanneneinlauf nach innen geneigt verlaufen und bildet so eine Zentrieröffnung für den Flaschenkolben mit aufgesetztem Dichtungsring

Der Dichtungsring 18 ist zwischen Unterseite 11 des Öffnungsrandes 16 des Kanneneinlaufs 5, dem oberen Rand 17 des Flaschenkolbens 2 und der Ringschulter 19 gehalten.

Der Öffnungsrand 16 kann sich bis zum Ende des kürzeren L-Schenkels des Dichtungsrings oder etwas über diesen hinaus erstrecken.

Zur lösbaren Verbindung des unteren Endes 28 des Handgriffs 27 ist an diesem ein Rastelement 29 angeordnet, das in einer Öffnung am unteren Ende 40 des oberen Gehäuseteils 24 eingerastet ist. Benachbart und in Richtung zum unteren Gehäuseteil 25 weist das untere Ende 28 des Handgriffs 27 einen Anlageabschnitt 38 auf, der flächig auf der Außenseite des oberen Gehäuseteils anliegt.

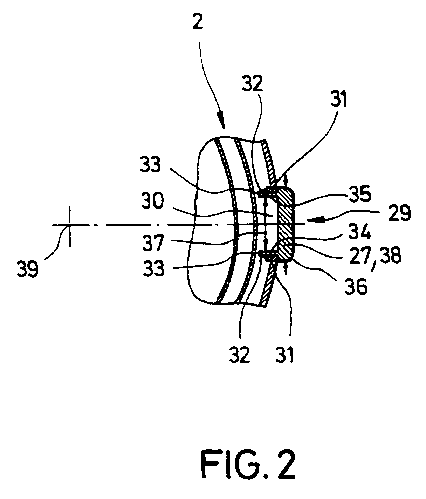

Zur Verdeutlichung der Rastverbindung des Handgriffs 27 ist in Figur 2 ein Schnitt entlang der Linie II-II aus Figur 1 dargestellt. Gleiche Bezugszeichen kennzeichnen gleiche Teile und werden nur noch teilweise erwähnt.

Das Rastelement 29 ist durch zwei Einsteckflansche 34 und 35 gebildet, an deren freien Enden 33 voneinander fortgerichtete Rasthaken 32 angeordnet sind. Diese hintergreifen nach innen zum Flaschenkolben 2 weisende seitliche Öffnungsränder 31 der im oberen Gehäuseteil ausgebildeten Rastöffnung 30. Der Handgriff 27 beziehungsweise der Anlageabschnitt 38 des Handgriffs sind im Bereich der Rastöffnung 30 mit einer Breite 36 ausgebildet, die größer als ein Abstand 37 der Einsteckflansche 34 und 35 ist. Auf diese Weise steht der Handgriff 27 seitlich über die Einsteckflansche 34 und 35 über und liegt benachbart zur Rastöffnung 30 von außen am oberen Gehäuseteil an.

Im folgenden sei kurz der Montageablauf der erfindungsgemäßen Thermokanne 1 erläutert.

Kanneneinlauf 5 und oberes Gehäuseteil 24 sind schon miteinander durch die Schnappverbindung verrastet, wobei auch das untere Ende des Handgriffs 27 in der Rastöffnung 30 eingerastet ist, bevor der Flaschenkolben 2 mit auf seinem oberen Ende 17 angeordneten Dichtungsring 18 von unten in das obere Gehäuseteil 24 eingesteckt wird. Vorzugsweise verlaufen die Ringschultern von unten nach oben etwas aufeinander zu, wodurch der Dichtungsring 18 unterhalb des Öffnungsrandes 16 zentriert wird. Darauffolgend wird das untere Gehäuseteil 25 mit gegebenenfalls bereits eingeschraubtem Bodendeckel 26 von unten auf das obere Gehäuseteil 24 aufgeschraubt.

Das Herausnehmen des Flaschenkolbens aus der Thermokanne 1 erfolgt analog in umgekehrter Reihenfolge.

## Patentansprüche

1. Thermokanne (1) mit einem einen Flaschenkolben (2) enthaltenen Kannenkörper (3), welcher zumindest ein Kannengehäuse (4) und einen mit diesem lösbar verbundenen Kanneneinlauf (5) aufweist, wobei im Kanneneinlauf eine mit dem Inneren (6) des Flaschenkolbens (2) in Verbindung stehende und durch einen Deckel (7) verschließbare Einfüllöffnung (8) ausgebildet ist, wobei als lösbare Schnappverbindung am oberen Ende (9) des Kannengehäuses (4) ein Rastvorsprung (14) in Richtung Kanneneinlauf (5) und von einer Unterseite (11) des Kanneneinlaufs (5) ein Gegenrastflansch (12) absteht,
**dadurch gekennzeichnet,**
daß der Rastvorsprung (14) an einem Rastflansch (10) ausgebildet ist, welcher sich ringförmig um eine der Einfüllöffnung (8) zugeordnete Gehäuseöffnung (13) des Kannengehäuses (4) erstreckt, und der in Richtung Rastflansch (10) von der Unterseite (11) abstehende Gegenrastflansch (12) ringförmig ist und in Verbindungsstellung von außen am Rastflansch (10) anliegt.

2. Thermokanne nach Anspruch 1,
**dadurch gekennzeichnet,**
daß Rastflansch (10) und Gegenrastflansch (12) kreisringförmig sind.

3. Thermokanne nach Anspruche 1 oder 2,
**dadurch gekennzeichnet,**
daß ein entgegengesetzt zum Rastvorsprung (14) am Rastflansch (10) gerichteter Rastvorsprung (15) am Gegenrastflansch (12) ausgebildet ist.

4. Thermokanne nach wenigstens einem der vorangehenden Ansprüche,
**dadurch gekennzeichnet,**
daß der Rastvorsprung (15) des Gegenrastflansches (12) den Rastvorsprung (14) des Rastflansches (10) in Verbindungsstellung untergreift.

5. Thermokanne nach wenigstens einem der vorangehenden Ansprüche,
**dadurch gekennzeichnet,**
daß Rastflansch (10) und Gegenrastflansch (12) im wesentlichen vertikal verlaufen.

6. Thermokanne nach wenigstens einem der vorangehenden Ansprüche,
**dadurch gekennzeichnet,**
daß Rastflansch (10) und/oder Gegenrastflansch (12) mit ihren freien Enden mit der Unterseite (11) des Kanneneinlaufs (5) beziehungsweise mit dem oberen Ende (9) des Kannengehäuses (4) in Anlage sind.

7. Thermokanne nach wenigstens einem der vorangehenden Ansprüche,
**dadurch gekennzeichnet,**
daß ein im wesentlichen horizontaler Öffnungsrand (16) die Einfüllöffnung (8) umgibt und zwischen Öffnungsrand (16), Rastflansch (10) und einem oberen Rand (17) des Flaschenkolbens (2) ein Dichtungsring (18) angeordnet ist.

8. Thermokanne nach wenigstens einem der vorangehenden Ansprüche,
**dadurch gekennzeichnet,**
daß eine radial zum Rastflansch (10) nach innen versetzte Ringschulter (19) vom Kannengehäuse (4) absteht und am Dichtungsring (18) zumindest seitlich anliegt.

9. Thermokanne nach wenigstens einem der vorangehenden Ansprüche,
**dadurch gekennzeichnet,**
daß Ringschulter (19) und Rastflansch (10) als U-Schenkel eines U-Profils (20) am oberen Ende (9) des Kannengehäuses (4) ausgebildet sind.

10. Thermokanne nach wenigstens einem der vorangehenden Ansprüche,
**dadurch gekennzeichnet,**
daß die Ringschulter (19) mit ihrem unteren Ende (21) über einen U-Steg (22) des U-Profils (20) nach unten in Richtung Flaschenkolben (2) übersteht.

11. Thermokanne nach wenigstens einem der vorangehenden Ansprüche,
**dadurch gekennzeichnet,**
daß die Ringschulter (19) in Verbindungsstellung mit ihrem oberen Ende (23) von unten am Öffnungsrand (16) anliegt.

12. Thermokanne nach wenigstens einem der vorangehenden Ansprüche,
**dadurch gekennzeichnet,**
daß die Ringschulter (19) gegenüber dem Rastflansch (10) unter einem spitzen Winkel nach außen geneigt verläuft.

13. Thermokanne nach wenigstens einem der vorangehenden Ansprüche, wobei das Kannengehäuse (4) ein oberes Gehäuseteil (24), ein unteres Gehäuseteil (25) und einen Bodendeckel (26) aufweist, welche lösbar miteinander verbindbar sind, und wobei ein Handgriff (27) vom Kanneneinlauf (5) in Richtung Kannengehäuse (4) nach unten absteht und der Deckel (7) verschwenkbar am Kanneneinlauf (5) gelagert ist,
**dadurch gekennzeichnet,**
daß der Handgriff an seinem unteren Ende (28) ein Rastelement (29) zum Einrasten in eine im oberen oder unteren Gehäuseteil (24, 25) angeordneten Rastöffnung (30) aufweist.

14. Thermokanne nach wenigstens einem der vorangehenden Ansprüche,
**dadurch gekennzeichnet,**
daß das Rastelement (29) wenigstens zwei seitliche Öffnungsränder (31) der Rastöffnung (30) hintergreifende Rasthaken (32) aufweist.

15. Thermokanne nach wenigstens einem der vorangehenden Ansprüche,
**dadurch gekennzeichnet,**
daß die Rasthaken (32) an freien Enden (33) von am unteren Ende (28) des Handgriffes (27) in Richtung Rastöffnung (30) abstehenden Einsteckflanschen (34, 35) angeordnet sind.

16. Thermokanne nach wenigstens einem der vorangehenden Ansprüche,
**dadurch gekennzeichnet,**
daß die Einsteckflansche (34, 35) im wesentlichen parallel zueinander sind und in einer zum Vergleich zur Breite (36) des Handgriffs (27) im Bereich der Rastöffnung (30) geringerem Abstand (37) angeordnet sind.

17. Thermokanne nach wenigstens einem der vorangehenden Ansprüche,
**dadurch gekennzeichnet,**
daß das untere Ende (28) des Handgriffs (27) als am Kannengehäuse (4) von außen formschlüssig anliegender Anlageabschnitt (38) ausgebildet ist.

## Claims

1. Insulated jug (1) having a jug body (3) containing a flask unit (2) and which has at least one jug housing (4) and a jug intake (5) detachably connected to same, a filling aperture being formed in the jug intake, which aperture is connected with the inside (6) of the flask unit (2) and may be sealed by a lid (7), a snap-in protrusion (14) projecting as a detachable snap connection on the upper end (9) of the jug housing (4) in the direction of the jug intake (5) and a mating snap-in flange (12) projecting from an underside (11) of the jug intake (5),
**characterised in that**
the snap-in protrusion (14) is formed on a snap-in flange (10) which extends as a ring around a housing aperture (13), associated with the filling aperture (8), of the jug housing (4) and the mating snap-in flange (12) projecting from the underside (11) in the direction of the snap-in flange (10) is annular and fits on to the snap-in flange from outside in the connecting position.

2. Insulated jug according to claim 1,
**characterised in that**
the snap-in flange (10) and mating snap-in flange (12) are annular.

3. Insulated jug according to claims 1 or 2,
**characterised in that**
a snap-in protrusion (15) is formed on the mating snap-in flange (12) facing the opposite direction from the snap-in protrusion (14) on the snap-in flange (10).

4. Insulated jug according to at least one of the preceding claims ,
**characterised in that**
the snap-in protrusion (15) of the mating snap-in flange (12) grips underneath the snap-in protrusion (14) of the snap-in flange (10) in the connecting position.

5. Insulated jug according to at least one of the preceding claims ,
**characterised in that**
the snap-in flange (10) and mating snap-in flange (12) run essentially vertically.

6. Insulated jug according to at least one of the preceding claims,
**characterised in that**
the free ends of the snap-in flange (10) and/or mating snap-in flange (12) are in contact with the underside (11) of the jug intake (5) or with the upper end (9) of the jug housing (4).

7. Insulated jug according to at least one of the preceding claims,
**characterised in that**
a essentially horizontal aperture edge (16) surrounds the filling aperture (8) and a sealing ring (18) is arranged between the aperture edge (16), snap-in flange (10) and an upper edge (17) of the flask unit (2).

8. Insulated jug according to at least one of the preceding claims,
**characterised in that**
a ring-shaped shoulder (19) offset radially inwards in relation to the snap-in flange (10) projects from the jug housing (4) and lies against the sealing ring (18), at least at the side.

9. Insulated jug according to at least one of the preceding claims,
**characterised in that**
the ring-shaped shoulder (19) and snap-in flange (10) are configured as the legs of a U-profile (20) at the upper end (9) of the jug housing (4).

10. Insulated jug according to at least one of the preceding claims,
**characterised in that**
the lower end (21) of the ring-shaped shoulder (19) projects over a U-shaped web (22) of the U-profile (20) downwards in the direction of the flask unit (2).

11. Insulated jug according to at least one of the preceding claims,
**characterised in that**
in the connecting position, the upper end (23) of the ring-shaped shoulder (19) sits against the aperture edge (16) from below.

12. Insulated jug according to at least one of the preceding claims,
**characterised in that**
the ring-shaped shoulder (19) runs at an acute angle to the snap-in flange (10) and inclined outwards.

13. Insulated jug according to at least one of the preceding claims, the jug housing (4) having an upper housing portion (24), a lower housing portion (25) and a base cover (26), all of which may be detachably connected with one another, and a handle (27) projecting downwards from the jug intake (5) in the direction of the jug housing (4) and the lid (7) being mounted on the jug intake (5) so as to be swivellable,
**characterised in that**
the handle has at its lower end (28) a snap-in element (29) for locking into a snap-in aperture (30) arranged in the upper or lower housing portion (24, 25).

14. Insulated jug according to at least one of the preceding claims,
**characterised in that**
the snap-in element (29) has snap-in hooks (32) catching behind at least two side aperture edges (31) of the snap-in aperture (30).

15. Insulated jug according to at least one of the preceding claims,
**characterised in that**
the snap-in hooks (32) are arranged on free ends (33) of push-in flanges (34, 35) projecting from the lower end (28) of the handle (27) in the direction of the snap-in aperture (30).

16. Insulated jug according to at least one of the preceding claims,
**characterised in that**
the push-in flanges (34, 35) are essentially parallel to one another and are arranged at a smaller spacing (37) in comparison to the width (36) of the handle (27) in the region of the snap-in aperture (30).

17. Insulated jug according to at least one of the preceding claims,
**characterised in that**
the lower end (28) of the handle (27) is configured as a contact section (38) in form-locking manner on the jug housing (4) from outside.

## Revendications

1. Carafe isotherme (1) comprenant un corps de carafe (3), qui renferme un flacon (2) et présente au moins un carter de carafe (4) et, reliée de manière amovible à celui-ci, une entrée de carafe (5), une ouverture de remplissage (8) en communication avec l'intérieur (6) du flacon (2) et susceptible d'être fermée par un couvercle (7) étant réalisée dans l'entrée de carafe, et une protubérance d'encliquetage (14), qui fait saillie à l'extrémité supérieure (9) du carter de carafe (4) en direction de l'entrée de carafe (5), ainsi qu'un flasque conjugué d' encliquetage (12), qui fait saillie d'un côté inférieur (11) de l'entrée de carafe (5), faisant office d'assemblage par enclenchement démontable,
caractérisée en ce que la protubérance d'encliquetage (14) est réalisée sur un flasque d'encliquetage (10), qui s'étend de manière annulaire autour d'une ouverture de carter (13) du carter de carafe (4), associée à l'ouverture de remplissage (8), et en ce que le flasque conjugué d'encliquetage (12) faisant saillie du côté inférieur (11) en direction du flasque d' encliquetage (10) est de forme annulaire et s'appuie de l'extérieur contre le flasque d'encliquetage (10), dans la position assemblée.

2. Carafe isotherme selon la revendication 1, caractérisée en ce que le flasque d'encliquetage (10) et le flasque conjugué d'encliquetage (12) sont de forme annulaire circulaire.

3. Carafe isotherme selon la revendication 1 ou 2, caractérisée en ce que sur le flasque conjugué d'encliquetage (12) est réalisée une protubérance d'encliquetage (15) dirigée à l'encontre de la protubérance d'encliquetage (14) sur le flasque d'encliquetage (10).

4. Carafe isotherme selon l'une au moins des revendications précédentes, caractérisée en ce que la protubérance d'encliquetage (15) du flasque conjugué d'encliquetage (12) s'engage sous la protubérance d'encliquetage (14) du flasque d'encliquetage (10), dans la position assemblée.

5. Carafe isotherme selon l'une au moins des revendications précédentes, caractérisée en ce que le flasque d'encliquetage (10) et le flasque conjugué d'encliquetage (12) s'étendent sensiblement de manière verticale.

6. Carafe isotherme selon l'une au moins des revendications précédentes, caractérisée en ce que le flasque d'encliquetage (10) et/ou le flasque conjugué d'encliquetage (12) sont en appui, avec leurs extrémités libres, respectivement contre le côté inférieur (11) de l'entrée de carafe (5) et l'extrémité supérieure (9) du carter de carafe (4).

7. Carafe isotherme selon l'une au moins des revendications précédentes, caractérisée en ce qu'un bord d'ouverture (16) sensiblement horizontal entoure l'ouverture de remplissage (8), et un anneau d'étanchéité (18) est disposé entre le bord d'ouverture (16), le flasque d'encliquetage (10) et un bord supérieur (17) du flacon (2).

8. Carafe isotherme selon l'une au moins des revendications précédentes, caractérisée en ce qu'un épaulement annulaire (19) décalé radialement vers l'intérieur par rapport au flasque d'encliquetage (10), fait saillie du carter de carafe (4) et s'appuie au moins latéralement contre l'anneau d'étanchéité (18).

9. Carafe isotherme selon l'une au moins des revendications précédentes, caractérisée en ce que l'épaulement annulaire (19) et le flasque d'encliquetage (10) sont réalisés sous forme d'ailes de U d'un profilé en U (20) à l'extrémité supérieure (9) du carter de carafe (4).

10. Carafe isotherme selon l'une au moins des revendications précédentes, caractérisée en ce que l'épaulement annulaire (19) s'étend avec son extrémité inférieure (21) au-delà d'une âme de U (22) du profilé en U (20), vers le bas en direction du flacon (2).

11. Carafe isotherme selon l'une au moins des revendications précédentes, caractérisée en ce que dans la position assemblée, l'épaulement annulaire (19) s'appuie avec son extrémité supérieure (23), par le bas, contre le bord d'ouverture (16).

12. Carafe isotherme selon l'une au moins des revendications précédentes, caractérisée en ce que l'épaulement annulaire (19) s'étend de manière inclinée vers l'extérieur, sous un angle aigu par rapport au flasque d'encliquetage (10).

13. Carafe isotherme selon l'une au moins des revendications précédentes, le carter de carafe (4) comprenant une partie de carter supérieure (24), une partie de carter inférieure (25) et un couvercle de fond (26), qui peuvent être assemblés de manière démontable les uns aux autres, une poignée (27) faisant saillie de l'entrée de carafe (5) en direction du carter de carafe (4) vers le bas, et le couvercle (7) étant monté pivotant sur l'entrée de carafe (5), caractérisée en ce que la poignée présente à son extrémité inférieure (28), un élément d'encliquetage (29) destiné à venir s'encliqueter dans une ouverture d'encliquetage (30) disposée dans la partie de carter supérieure ou inférieure (24, 25).

14. Carafe isotherme selon l'une au moins des revendications précédentes, caractérisée en ce que l'élément d'encliquetage (29) comporte au moins deux crochets d'encliquetage (32) s'engageant derrière des bords latéraux d'ouverture (31) de l'ouverture d'encliquetage (30).

15. Carafe isotherme selon l'une au moins des revendications précédentes, caractérisée en ce que les crochets d'encliquetage (32) sont disposés à des extrémités libres (33) de flasques insérables (34, 35) faisant saillie à l'extrémité inférieure (28) de la poignée (27) en direction de l'ouverture d'encliquetage (30).

16. Carafe isotherme selon l'une au moins des revendications précédentes, caractérisée en ce que les flasques insérables (34, 35) sont sensiblement parallèles l'un à l'autre et sont disposés à une distance (37) l'un de l'autre moindre, comparée à la largeur (36) de la poignée (27) dans la zone de l'ouverture d'encliquetage (30).

17. Carafe isotherme selon l'une au moins des revendications précédentes, caractérisée en ce que l'extrémité inférieure (28) de la poignée (27) est réalisée sous forme de troncon d'appui (38) s'appuyant de l'extérieur, par complémentarité de forme, sur le carter de carafe (4).
